Europäisches Patentamt

(19) European Patent Office

Office européen des brevets

(11) EP 0 546 911 B1

## (12) FASCICULE DE BREVET EUROPEEN

(45) Date de publication et mention
de la délivrance du brevet:
**04.09.1996 Bulletin 1996/36**

(51) Int. Cl.⁶: **B65D 51/00**, F16J 15/02

(21) Numéro de dépôt: **92403304.6**

(22) Date de dépôt: **07.12.1992**

(54) **Joint annulaire d'étanchéité et réservoir de carburant**

Dichtungsring und Brennstofftank

Sealing ring and fuel tank

(84) Etats contractants désignés:
**BE DE ES GB IT NL SE**

(30) Priorité: **10.12.1991 FR 9115256**

(43) Date de publication de la demande:
**16.06.1993 Bulletin 1993/24**

(73) Titulaire: **LE JOINT FRANCAIS,
Société en Nom Collectif
F-75008 Paris (FR)**

(72) Inventeurs:
• **Voirol, Bernard
F-95240 Cormeilles en Parisis (FR)**
• **Cochin, Didier
F-92140 Clamart (FR)**

(74) Mandataire: **Ramey, Daniel et al
Cabinet Ores
6 Avenue de Messine
75008 Paris (FR)**

(56) Documents cités:
FR-A- 1 186 929          FR-A- 2 358 596
FR-A- 2 593 753          GB-A- 2 241 494

## Description

La présente invention se rapporte principalement à l'utilisation d'un joint annulaire d'étanchéité sur une tubulure d'un réservoir, notamment de carburant pour véhicule automobile.

Des réservoirs à essence d'un type connu comportent à l'extrémité d'une canalisation de remplissage une gorge à section arrondie garnie d'un joint à section circulaire qui comporte une rainure en V formée dans sa face périphérique extérieure. L'étanchéité est obtenue notamment par une compression du joint au moyen du bouchon, ce qui nécessite une force élevée d'application du bouchon sur le joint. Non seulement cette force demande un effort important à l'automobiliste lors de chaque remplissage du réservoir, mais elle entraîne un risque d'adhérence du bouchon de réservoir au joint. Ce risque est aggravé par la surface de contact importante entre le joint et le bouchon. Une telle adhérence se traduit par une ouverture difficile du bouchon, voire même impossible. Les vapeurs d'essence d'un réservoir normalement rempli facilitent l'ouverture du bouchon en évitant une forte adhérence du bouchon au joint. Toutefois, les véhicules sont parfois parqués avec peu ou pas d'essence dans le réservoir, notamment en sortie de chaîne d'assemblage, et on constate alors parfois une adhérence du bouchon au joint.

De plus, le joint connu risque au montage de pivoter dans la gorge arrondie et de présenter une partie pleine à la surface d'appui du bouchon. Il en résulte un effort de serrage encore plus important, et la rainure en V du joint peut former une ligne de fuite d'essence.

On connaît, par le document FR-A-2 593 753 un joint d'étanchéité pour tubulure de réservoir de carburant, ce joint comprenant à sa périphérie externe une rainure en V destinée à être écrasée et fermée lors du serrage du bouchon sur la tubulure, et par les documents FR-A-2 358 596 et GB-A-2 241 494, des joints à section en U ou en X destinés à être montés sur le corps cylindrique ou dans une gorge d'un bouchon de réservoir. Dans tous les cas, la qualité de l'étanchéité dépend de l'effort de serrage du bouchon, cette étanchéité étant meilleure quand l'effort de serrage du bouchon est plus important.

On connaît par le document FR-A-1 186 929, un joint annulaire d'étanchéité, en particulier pour cartouche filtrante, ce joint comprenant une surface cylindrique interne permettant son montage sur un col cylindrique d'un couvercle et ayant en périphérie externe deux lèvres souples applicables sur des surfaces du couvercle et de la cartouche filtrante. Ce joint connu est encastré axialement entre ces deux surfaces d'étanchéité qui sont parallèles entre elles et perpendiculaires à l'axe du joint, pour assurer une étanchéité par une compression axiale nécessitant l'application d'un effort relativement important, la qualité de l'étanchéité dépendant de l'importance de la compression.

C'est un but de la présente invention d'offrir un joint assurant une étanchéité désirée avec un effort de serrage faible.

C'est aussi un but de la présente invention d'offrir un joint présentant une faible surface de contact avec le bouchon.

C'est encore un but de la présente invention d'offrir un joint qui se maintient fermement en place dans la gorge de la canalisation de remplissage d'un réservoir.

L'invention a donc pour objet l'utilistion d'un joint annulaire d'étanchéité sur une tubulure de réservoir, en particulier d'un réservoir de carburant pour véhicule automobile, qui reçoit à son extrémité ouverte un bouchon de fermeture coopérant avec une jupe d'appui sur une lèvre du joint d'étanchéité monté dans une gorge annulaire de la tubulure, caractérisé en ce que la gorge annulaire de la tubulure a une section sensiblement rectangulaire ou carrée coopérant avec une partie radialement interne de montage et de positionnement du joint, cette partie radialement interne ayant en section une forme correspondant à celle de la gorge de la tubulure pour assurer le maintien du joint en position et empêcher son pivotement ou son basculement dans ladite gorge lors du serrage du bouchon sur la tubulure, et en ce que la lèvre est délimitée par des rainures concaves formées dans une face périphérique extérieure et dans une face radiale du joint de sorte que l'étanchéité entre le bouchon et la tubulure résulte de la flexion de ladite lèvre par la jupe du bouchon.

Ainsi, le joint peut être positionné correctement, sans risque de pivotement, dans une gorge dont la forme est adaptée à celle de la surface périphérique interne du joint. On obtient, en particulier, un montage très ferme du joint dans la gorge lorsque la surface périphérique interne du joint est cylindrique et que la gorge est à section rectangulaire ou carrée. Le joint monté dans la gorge est très difficile à sortir de la gorge et reste correctement positionné, malgré les efforts qui peuvent être exercés sur lui par le bouchon. De plus, les rainures concaves qui délimitent la lèvre d'étanchéité autorisent une flexion de cette lèvre par un moindre effort, à la mise en place du bouchon sur la tubulure du réservoir. L'effort de serrage à la fermeture est ainsi réduit.

L'invention sera mieux comprise au moyen de la description ci-après et des dessins annexés donnés comme des exemples non limitatifs et dans lesquels :

- la figure 1 est une vue schématique en perspective d'un joint selon la présente invention ;
- la figure 2 est une demi-vue à plus grande échelle et en section transversale de ce joint ;
- la figure 3 est une vue schématique partielle en coupe axiale d'un réservoir d'essence selon la présente invention.

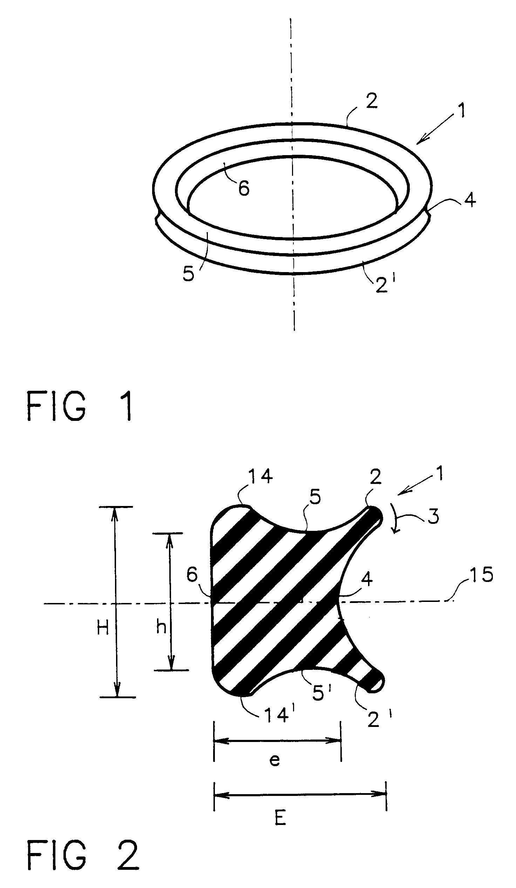

Sur les figures 1 à 3, on a utilisé les mêmes références pour désigner les mêmes éléments.

Sur les figures 1 et 2, on peut voir un joint 1 selon la présente invention comportant une lèvre 2 destinée à fléchir selon la flèche 3 sous l'effort d'appui d'un élément de fermeture. La lèvre 2 est délimitée par des rainures concaves 4 et 5 formées respectivement dans la face périphérique extérieure et dans la face radiale supérieure du joint. Avantageusement, le profil de chacune des rainures 4 et 5 est défini par un arc, par exemple un arc de cercle.

L'extrémité de la lèvre 2 est de préférence convexe et arrondie et son rayon de courbure est inférieur au rayon de courbure de chacune des rainures 4 et 5.

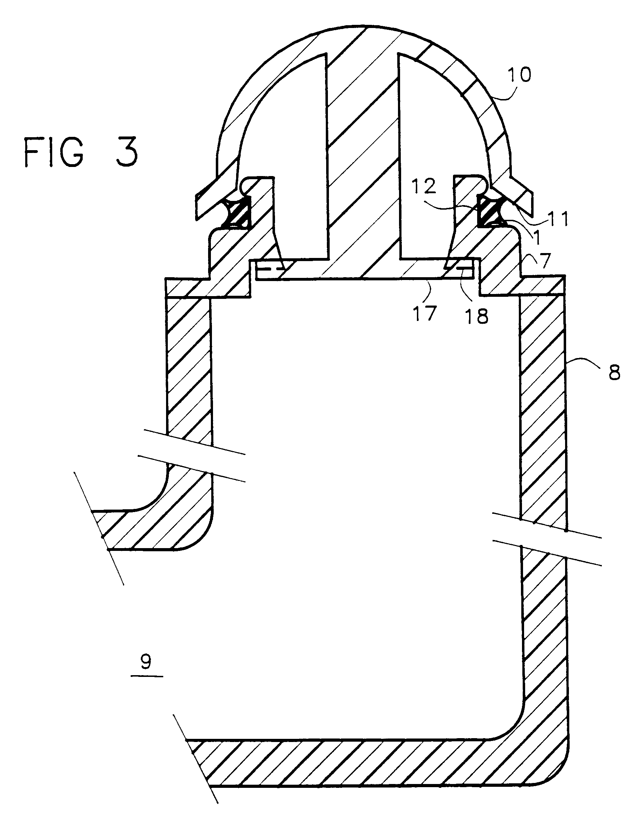

Le joint 1 selon la présente invention comporte des moyens 6 permettant d'assurer son positionnement et son maintien sur un support, notamment dans une gorge annulaire d'un embout 7 (figure 3), placé à l'extrémité d'une canalisation 8 de remplissage d'un réservoir de carburant 9 notamment pour véhicule automobile. Le positionnement précis du joint 1 dans cette gorge permet une orientation correcte de la lèvre 2 par rapport à un élément de fermeture tel que le bouchon 10 de la figure 3, et plus précisément par rapport à la jupe tronconique 11 du bouchon 10.

On s'assure ainsi que l'étanchéité est réalisée sensiblement uniquement par une flexion de la lèvre 2. Dans l'exemple de réalisation illustré, le moyen 6 est constitué par la face cylindrique interne du joint. Ainsi, en disposant le joint 1 dans une gorge rectangulaire ou carrée 12 de l'embout 7, on assure son positionnement précis, et notamment on empêche le basculement du joint.

Avantageusement, la face cylindrique interne 6 du joint est reliée à la rainure concave 5 par une partie convexe 14, avantageusement arrondie, qui facilite le montage du joint dans la gorge.

De préférence, le joint 1 selon la présente invention est symétrique de façon à pouvoir être monté dans un sens ou dans l'autre dans la gorge 12. Plus précisément, la section transversale du joint représentée en figure 2 est de forme symétrique par rapport à un plan transversal médian 15, et le joint comporte donc à sa périphérie extérieure deux lèvres 2, 2' symétriques l'une de l'autre par rapport à ce plan, la lèvre 2' étant délimitée entre la rainure 4 de la face périphérique extérieure du joint et une rainure 5' de sa face radiale inférieure, cette rainure 5' étant raccordée par une surface convexe arrondie 14' à la face périphérique interne du joint.

Chacune des faces radiales du joint 1 peut donc assurer l'étanchéité par la flexion d'une lèvre.

Soit E l'étendue radiale maximale du joint, c'est-à-dire la distance entre l'extrémité de la lèvre 2 et la face interne 6. Soit e la distance entre le fond de la première cavité 4 et la face interne 6. Avantageusement,

$$1,20 < E/e < 2,00.$$

Soient H la hauteur maximale du joint 1 et h la distance séparant les fonds des rainures 5 et 5'. Avantageusement,

$$1,00 < H/h < 1,80$$

Dans un exemple de réalisation :

H = 5 mm
h = 4 mm
E = 5 mm
e = 3,5 mm.

Le rayon de courbure des rainures 4 et 5 est égal à 2,5 mm.

Le rayon de courbure de l'extrémité de la lèvre 2 est de 0,4 mm.

Le rayon de courbure de la partie convexe 14 est de 0,8 mm.

Le diamètre interne du joint est dans cet exemple d'environ 50 mm.

Avantageusement, la lèvre 2 est sensiblement orientée à 45° par rapport au plan 15.

Le bouchon 10 de la figure 3 est du type à baïonnette et comporte des doigts de verrouillage 17 coopérant avec des rampes de verrouillage 18 de l'embout 7 de la canalisation 8.

La jupe 11 du bouchon 10 est de préférence tronconique. Le demi-angle au sommet de cette jupe tronconique est de l'ordre de 45°. Au montage du bouchon sur l'embout 7, cette jupe tronconique s'applique sur la lèvre 2 du joint dont la flexion permet un rattrapage des jeux et des tolérances de fabrication, ainsi qu'un autocentrage du bouchon, tout en réduisant le couple à appliquer au bouchon pour son verrouillage sur l'embout 7.

Le joint selon la présente invention est réalisé par exemple en caoutchouc ou en élastomère.

Il constitue une amélioration importante par rapport aux joints toriques comportant une fente en V qui, dans une orientation optimale, nécessitent pour le verrouillage des bouchons un couple beaucoup plus important.

Il peut de plus être réalisé de façon économique par moulage dans un moule en deux parties, dont le plan de joint correspond au plan 15 de la figure 2. En choisissant de façon appropriée les valeurs des rapports E/e et H/h, on obtient des lèvres 2,2' qui ne sont ni trop épaisses (ce qui augmenterait le couple d'ouverture ou de fermeture du bouchon) ni trop minces (ce qui rendrait beaucoup plus difficile l'usinage du moule).

## Revendications

1. Utilisation d'un joint annulaire d'étanchéité sur une tubulure de réservoir, en particulier d'un réservoir de carburant pour véhicule automobile, qui reçoit a son extrémité ouverte un bouchon (10) de fermeture coopérant avec une jupe (11) d'appui sur une lèvre (2) du joint d'étanchéité (1) monté dans une gorge annulaire (12) de la tubulure, caractérisé en ce que la gorge annulaire (12) de la tubulure a une section sensiblement rectangulaire ou carrée coopérant avec une partie radialement interne (6) de montage et de positionnement du joint, la surface périphérique interne de celle-ci présentant, en section, au moins un côté rectiligne, ladite partie radialement interne ayant en section une forme correspondant à celle de la gorge (12) de la tubulure (8) pour assurer le maintien du joint en position et empêcher son pivotement ou son basculement dans ladite gorge lors du serrage du bouchon (10) sur la tubulure, et en ce que la lèvre (2) est délimitée par des rainures concaves (4, 5) formées dans une face périphérique extérieure et dans une face radiale du joint de sorte que l'étanchéité entre le bouchon (10) et la tubulure (8) résulte de la flexion de ladite lèvre (2) par la jupe (11) du bouchon.

2. Utilisation d'un joint selon la revendication 1, caractérisée en ce que les rainures (4,5) délimitant la lèvre (2) on un profil défini par un arc, notamment un arc de cercle.

3. Utilisation d'un joint selon l'une quelconque des revendications précédentes, caractérisée en ce que l'extrémité de la lèvre (2) est arrondie.

4. Utilisation d'un joint selon l'une des revendications précédentes, caractérisée en ce que la jupe (11) d'appui sur la lèvre (2) du joint est de forme tronconique.

5. Utilisation d'un joint selon l'une des revendications précédentes, caractérisée en ce que l'extrémité de la lèvre (2) a un rayon de courbure inférieur à celui des rainures (4,5) précitées.

6. Utilisation d'un joint selon des revendications précédentes, caractérisée en ce que le joint est symétrique par rapport à un plan transversal médian perpendiculaire à son axe.

7. Utilisation d'un joint selon la revendication 6, caractérisée en ce que le plan de symétrie (15) passe par le fond de la rainure (4) formée dans la face périphérique externe du joint.

8. Utilisation d'un joint selon l'une des revendications précédentes, caractérisée en ce que le rapport de l'étendue radiale maximale E du joint (1) mesurée au niveau de la lèvre (2) et de son étendue radiale $e$ mesurée au niveau du fond de la rainure (4) de la face périphérique externe du joint est compris entre 1,20 et 2,00.

9. Utilisation d'un joint selon la revendication 7 ou 8, caractérisée en ce que le rapport de la hauteur maximale H du joint et de la distance $h$ séparant les fonds des rainures (5,5') des faces radiales du joint est compris entre 1,00 et 1,80.

10. Utilisation d'un joint selon l'une des revendications précédentes, caractérisée en ce que l'angle entre l'axe du joint et l'axe de la lèvre (2) est sensiblement égal à 45°.

## Claims

1. The use of an annular sealing gasket on a tank neck, in particular a fuel tank for a motor vehicle, which receives at its open end a stopper (10) for closing which cooperates with a bearing skirt (11) on a lip (2) of the sealing gasket (1) mounted in an annular recess (12) of the neck, characterized in that the annular recess (12) of the neck has a substantially rectangular or square section cooperating with a radially internal part (6) for mounting and positioning the gasket, the internal peripheral surface thereof having, in section, at least one rectilinear side, said radially internal part having, in section, a shape corresponding to that of the recess (12) of the neck (8) to ensure that the gasket is held in position and to prevent it from pivoting or tilting into said recess when the stopper (10) is clamped on the neck, and in that the lip (2) is delimited by concave grooves (4, 5) formed in an external peripheral face and in a radial face of the gasket such that the sealing between the stopper (10) and the neck (8) results in said lip (2) being bent by the skirt (11) of the stopper.

2. The use of a gasket according to Claim 1, characterized in that the grooves (4, 5) delimiting the lip (2) have a profile defined by an arc, in particular an arc of a circle.

3. The use of a gasket according to either one of the preceding claims, characterized in that the end of the lip (2) is rounded.

4. The use of a gasket according to one of the preceding claims, characterized in that the bearing skirt (11) on the lip (2) of the gasket has a truncated shape.

5. The use of a gasket according to one of the preceding claims, characterized in that the end of the lip (2) has a radius of curvature which is less than that of the above-mentioned grooves (4, 5).

6. The use of a gasket according to the preceding claims, characterized in that the gasket is symmetrical with respect to a median transverse plane perpendicular to its axis.

7. The use of a gasket according to Claim 6, characterized in that the plane of symmetry (15) passes through the base of the groove (4) formed in the external peripheral face of the gasket.

8. The use of a gasket according to one of the preceding claims, characterized in that the ratio of the maximum radial extent E of the gasket (1), measured at the level of the lip, to its radial extent $\underline{e}$, measured at the level of the base of the groove (4) of the external peripheral face of the gasket, is between 1.20 and 2.00.

9. The use of a gasket according to Claim 7 or 8, characterized in that the ratio of the maximum height H of the gasket to the distance $\underline{h}$ separating the bases of the grooves (5, 5') of the radial faces of the gasket, is between 1.00 and 1.80.

10. The use of a gasket according to one of the preceding claims, characterized in that the angle between the axis of the gasket and the axis of the lip (2) is substantially equal to 45°.

**Patentansprüche**

1. Verwendung einer ringförmigen Dichtung auf einem Behälterstutzen, insbesondere eines Kraftstoffbehälters für ein Kraftfahrzeug, der an seinem offenen Ende einen Verschlußstopfen (10) aufnimmt, welcher mit einer Schürze (11) zur Abstützung an einer Lippe (2) der Dichtung (1), die in einer ringförmigen Ausnehmung (12) des Stutzens montiert ist, zusammenwirkt, dadurch gekennzeichnet, daß die ringförmige Ausnehmung (12) des Stutzens einen im wesentlichen rechtwinkligen oder viereckigen Querschnitt aufweist, der mit einem radial inneren Teil (6) zur Montage und zur Positionierung der Dichtung zusammenwirkt, dessen innere Umfangsfläche im Querschnitt wenigstens eine gradlinige Seite umfaßt, wobei das radial innere Teil im Querschnitt eine Form aufweist, die derjenigen der Ausnehmung (12) des Stutzens (8) entspricht, um die Lagestbilität der Dichtung sicherzustellen und ihre Verschwenkung oder ihre Verkippung in der Ausnehmung während der Klemmung des Stopfens (10) auf dem Stutzen zu verhindern, und daß die Lippe (2) durch konkave Nuten (4, 5) begrenzt ist, die in einer äußeren peripherischen Seite und in einer radialen Seite der Dichtung gebildet sind, derart, daß die Dichtigkeit zwischen dem Stopfen (10) und dem Stutzen (8) aus der Biegung der Lippe (2) durch die Schürze (11) des Stopfens resultiert.

2. Verwendung einer Dichtung nach Anspruch 1, dadurch gekennzeichnet, daß die Nuten (4, 5), welche die Lippe (2) begrenzen, ein durch einen Bogen, insbesondere einen Kreisbogen, definiertes Profil aufweisen.

3. Verwendung einer Dichtung nach einem der vorhergehenden Ansprüche, dadurch gekennzeichnet, daß das Ende der Lippe (2) abgerundet ist.

4. Verwendung einer Dichtung nach einem der vorhergehenden Ansprüche, dadurch gekennzeichnet, daß die Schürze (11) zur Abstützung auf der Lippe (2) der Dichtung von kegelstumpfartiger Form ist.

5. Verwendung einer Dichtung nach einem der vorhergehenden Ansprüche, dadurch gekennzeichnet, daß das Ende der Lippe (2) einen Krümmungsradius aufweist, der kleiner ist als derjenige der vorerwähnten Nuten (4, 5).

6. Verwendung einer Dichtung nach einem der vorhergehenden Ansprüche, dadurch gekennzeichnet, daß die Dichtung in bezug auf eine transversale mittlere zu ihrer Achse senkrechte Ebene symmetrisch ist.

7. Verwendung einer Dichtung nach Anspruch 6, dadurch gekennzeichnet, daß die Symmetrieachse (15) durch den Boden der Nut (4), die in der äußeren peripherischen Seite der Dichtung gebildet ist, verläuft.

8. Verwendung einer Dichtung nach einem der vorhergehenden Ansprüche, dadurch gekennzeichnet, daß das Verhältnis von der maximalen radialen Ausdehnung E der Dichtung (1), die bezüglich der Lippe (2) gemessen ist, und von ihrer radialen Ausdehnung e, die bezüglich des Bodens der Nut (4) der äußeren peripherischen Seite der Dichtung gemessen ist, einschließlich zwischen 1,20 und 2,00 beträgt.

9. Verwendung einer Dichtung nach Anspruch 7 oder 8, dadurch gekennzeichnet, daß das Verhältnis der maximalen Höhe H der Dichtung und des Abstandes h, der die Böden der Nuten (5, 5') der radialen Seiten der Dichtung trennt, einschließlich zwischen 1,00 und 1,80 beträgt.

10. Verwendung einer Dichtung nach einem der vorhergehenden Ansprüche, dadurch gekennzeichnet, daß der Winkel zwischen der Achse der Dichtung und der Achse der Lippe (2) im wesentlichen gleich 45° ist.

FIG 1

FIG 2

FIG 3

10

12

11

1

7

17    18

8

9